# EUROPÄISCHE PATENTANMELDUNG

(11) **EP 3 462 073 A1**
(43) Veröffentlichungstag der Anmeldung: **03.04.2019**
(21) Anmeldenummer: 18197306.6
(22) Anmeldetag: 27.09.2018
(51) Int. Cl.: F16L 41/08

(54) **ANSCHLUSSVORRICHTUNG FÜR EINE NEBENROHRLEITUNG**

(30) Priorität: 29.09.2017 DE 102017122786
(71) Anmelder: IT-Inno Tec GmbH, 65629 Niederneisen (DE)
(72) Erfinder:
(74) Vertreter: Blumbach · Zinngrebe Patent- und Rechtsanwälte

(57) **Zusammenfassung**

Die Erfindung betrifft eine Anschlussvorrichtung für eine Nebenrohrleitung, die mit einer Öffnung in einer Hauptrohrleitung, eines Schachtes oder dergleichen zu verbinden ist. Die Anschlussvorrichtung ist gemäß der Erfindung dadurch gekennzeichnet, dass das Material des den Anschlagsflansch (13) ausbildenden Bereichs des Elastomereinsatzes gegenüber dem Material des Kompressionsbereichs (11) des Elastomereinsatzes härter ist und/oder, dass am Außenumfang des Elastomereinsatzes zwei, insbesondere genau zwei umlaufende Dichteinrichtungen (19) gesondert ausgebildet sind, die im Wesentlichen parallel zueinander verlaufen und dafür bemessen und bestimmt sind, durchschnittene Armierungen bei der Rohrwand-Queröffnung einzukammern.

## Beschreibung

Die Erfindung bezieht sich auf eine Anschlussvorrichtung für eine Nebenrohrleitung, die mit einer Öffnung in einer Hauptrohrleitung, eines Schachtes oder dergleichen zu verbinden ist.

Eine solche gattungsbildende Anschlussvorrichtung ist z.B. aus der EP 0 795 712 A1 bekannt. Hierbei weist ein hohlstopfenförmiger, relativ weicher Elastomereinsatz einen an die Öffnung angepassten Außenumfang, einen Innenumfang sowie einen Anschlagsflansch zur Anlage an der Wand der Hauptleitung auf und ein relativ härterer Anschlussstutzen weist ein Eingriffsende mit Außenumfang zur Zusammenarbeit mit dem Innenumfang des Elastomereinsatzes und ein Muffenende zur Zusammenarbeit mit der Nebenrohrleitung auf, wobei der Innenumfang des Elastomereinsatzes wenigstens teilweise enger als der Außenumfang des Eingriffsendes des Anschlussstutzens ist. Der Anschlussstutzen ist hierbei aus einem relativ härteren Material gegenüber dem Elastomereinsatz, der aus einem relativ weicheren Material besteht, wobei ein im Innenumfang des Einsatzes angeordnetes Gewinde dennoch in einer härteren Materialschicht enthalten sein kann, die einstückig mit dem Material des Anschlagsflansches verbunden ist. Insbesondere auch, um bei der Herstellung der Öffnung angeschnittene Stahlarmierung vor Korrosion zu schützen, wurde ferner vorgeschlagen, die Öffnung und/oder den Außenumfang des Einsatzes mit einem Reaktionskleber zu versehen, damit Feuchtigkeit und Dämpfe nicht bis zu den Schnittstellen der Stahlarmierung gelangen können.

Auch aus der DE 101 46 674 A1 ist eine gattungsbildende Anschlussdichtung bekannt. Die Dichtung besitzt einen Dichtungs- und Montagering aus Gummi oder Elastomer, der eine Ringwand aufweist, die zum Einsatz in die Rohrwand-Queröffnung bemessen ist, wobei die Außenseite in die Rohrwand-Queröffnung hineinpasst und ein freier, innerer Rand gebildet wird. Ein am Dichtungs- und Montagering angeordneter Anschlagsflansch zur Anlage an der Wand der Hauptleitung weist hierbei jedoch eine Kerbe aufweist, die für eine Wandverdünnung zur Bildung eines Filmscharniers sorgt.

Ferner weist der Dichtungs- und Montagering eine Ringöffnung auf, in welche die Nebenrohrleitung bzw. der Anschlussstutzen der Nebenrohrleitung eingreift. Zum Schutz von bei der Herstellung der Öffnung angeschnittener Stahlarmierung, umfasst die Ringöffnung eine erste einführungsseitige umlaufende Pressdichtlippe und eine zweite austrittsnahe umlaufende Pressdichtlippe, die parallel zueinander verlaufen und dafür bemessen sind, eventuell durchschnittene Armierungen, die in der Regel bereits durch eine Klebstoffschicht abgedeckt worden sind, bei der Rohrwand-Queröffnung einzurahmen, wobei nahe des inneren Randes der Ringwand ferner Abstützmittel vorgesehen sind, um durch Abstützung an der zweiten, austrittsnahen Pressdichtlippe einen zusätzlichen Druck auf den inneren Rand auszuüben.

Des Weiteren ist eine gattungsbildende Anschlussvorrichtung aus der DE 20 2006 005 685 U1 bekannt.

Auch bei dieser Weiterentwicklung ist ein hohlstopfenförmiger, relativ weicher Elastomereinsatz vorgesehen, dessen Außenseite an die Queröffnung angepasst ist, und dessen Innenseite einen konischen Schraubbereich aufweist, und ein relativ härterer Anschlussstutzen, der ein Eingriffsende, einen konischen Mittelteil mit Außengewinde und ein Antriebsende aufweist. Zur Abdichtung gegenüber der Queröffnung weist der Elastomereinsatz mit Bezug auf die Queröffnung einen Dichtlippenkragen zur Auflage am äußeren Rand und ein inneres Ende mit einem Anschlagwulst auf, der - bei montierter Anschlussvorrichtung - am inneren Rand der Queröffnung anliegt, wobei das Eingriffsende des Anschlussstutzens bei montierter Anschlussvorrichtung abstützend am inneren Ende des Elastomereinsatzes anliegt, wobei der Anschlussstutzen infolge des konischen Schraubbereichs den Elastomereinsatz gegen die Laibung der Queröffnung presst und der Anschlagswulst gegen den inneren Rand der Queröffnung gezogen und gedrückt wird.

Aufgabe der vorliegenden Erfindung ist es gegenüber dem vorbeschriebenen Stand der Technik eine Anschlussvorrichtung zu schaffen, welche eine nochmals verbesserte Abdichtung der Öffnung und insbesondere gegenüber der Wandung der Hauptleitung, des Schachtes oder dergleichen bietet.

Die gestellte Aufgabe wird durch eine Anschlussvorrichtung mit den Merkmalen nach Anspruchs 1 gelöst. Zweckmäßige Weiterbildungen sind Gegenstand der Unteransprüche.

Dementsprechend schlägt die Erfindung eine Anschlussvorrichtung vor, und zwar für eine Nebenrohrleitung, die mit einer Öffnung in einer Hauptrohrleitung, eines Schachtes oder dergleichen, nachfolgend auch als Rohrwand-Queröffnung bezeichnet, zu verbinden ist, welche einen hohlstopfenförmigen Elastomereinsatz aufweist, der einen an die Öffnung angepassten Außenumfang, einen ersten, einen Anschlagsflansch ausbildenden Bereich zur Anlage an der Außenwand der Hauptleitung, des Schachtes oder dergleichen, einen Innenumfang und einen sich an den Anschlagsflansch anschließenden Kompressionsbereich besitzt, der sich in die Öffnung hinein erstreckt, und welche einen Anschlussstutzen aufweist, der ein Eingriffsende mit Außenumfang zur Zusammenarbeit mit dem Innenumfang des Elastomereinsatzes sowie ein Muffenende oder einen Hohlraum zur Zusammenarbeit mit der Nebenrohrleitung besitzt, wobei der Innenumfang des Elastomereinsatzes wenigstens teilweise enger als der Außenumfang des Eingriffsendes des Anschlussstutzens ist. Die Anschlussvorrichtung ist gemäß der Erfindung dadurch gekennzeichnet, dass das Material des den Anschlagsflansch ausbildenden Bereichs des Elastomereinsatzes gegenüber dem Material des Kompressionsbereichs des Elastomereinsatzes härter ist und/oder, dass am Außenumfang des Elastomereinsatzes zwei, insbesondere genau zwei umlaufende Dichteinrichtungen gesondert ausgebildet sind, die im Wesentlichen parallel zueinander verlaufen und dafür bemessen und bestimmt sind, durchschnittene Armierungen bei der Rohrwand-Queröffnung einzukammern.

Wesentliche Vorteile einer solchen Anschlussvorrichtung gegenüber den vorerwähnten gemäß Stand der Technik liegen darin, dass aufgrund des aus härterem Material ausgebildeten Anschlagsflansches gegenüber dem Material des Kompressionsbereichs ein verbesserter und insbesondere definierter Sitz des Elastomereinsatzes insgesamt in der Öffnung sichergestellt ist, welches in Folge auch zu einer nochmals effektiveren Abdichtung führt. Ergänzend oder alternativ kann die Abdichtung zusätzlich bzw. auch in der Wirkung nochmals mittels der beiden umlaufenden und durchschnittene Armierungen bei der Rohrwand-Queröffnung einkammernden Dichteinrichtungen gesteigert werden, welche aufgrund deren Anordnung am Außenumfang des Elastomereinsatzes beim Zusammenarbeiten bzw. -wirken des Außenumfangs des Eingriffsendes des Anschlussstutzens mit dem Innenumfang des Elastomereinsatzes direkt an vorbestimmter Stelle an die, die Öffnung definierende Wandung der Hauptleitung, des Schachtes oder dergleichen gepresst werden.

Weitere Merkmale und Vorteile der Erfindung, welche nicht nur in der jeweils angegebenen Kombination, sondern auch in anderen Kombinationen oder in Alleinstellung verwendbar sind, ohne den Rahmen der vorliegenden Erfindung zu verlassen, werden aus der nachfolgenden Beschreibung von bevorzugten, jedoch lediglich beispielhaften Ausführungsformen anhand der beigefügten Zeichnungen ersichtlich. In den Zeichnungen zeigen:
Fig. 1- die Prinzipskizze einer ersten Ausführungsform einer Anschlussvorrichtung gemäß der Erfindung,
Fig. 2- die Prinzipskizze einer zweiten Ausführungsform einer Anschlussvorrichtung gemäß der Erfindung,
Fig. 3- die Prinzipskizze einer dritten Ausführungsform einer Anschlussvorrichtung gemäß der Erfindung,
Fig. 4- die Prinzipskizze einer vierten Ausführungsform einer Anschlussvorrichtung gemäß der Erfindung,
Fig. 5- die Prinzipskizze einer fünften Ausführungsform einer Anschlussvorrichtung gemäß der Erfindung,
Fig. 6- die Prinzipskizze einer sechsten Ausführungsform einer Anschlussvorrichtung gemäß der Erfindung, und
Fig. 7- die Prinzipskizze einer siebten Ausführungsform einer Anschlussvorrichtung gemäß der Erfindung.

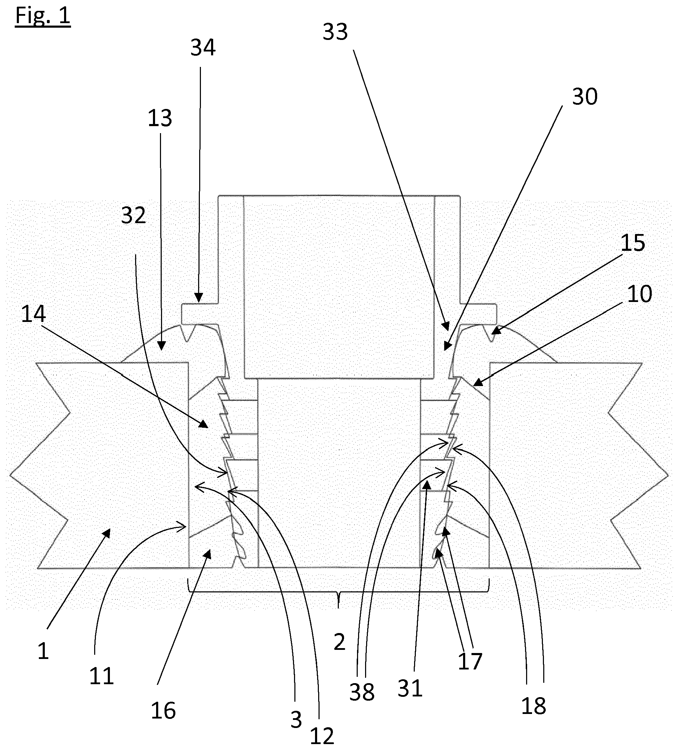

Fig. 1 zeigt als Prinzipskizze einen Ausschnitt aus einer Hauptrohrleitung 1, die mit einer nachträglichen Querbohrung oder Öffnung 2 versehen ist, einen in die Öffnung 2 eingesetzten hohlstopfenförmigen Elastomereinsatz 10 mit einem Außenumfang 11 und einem Innenumfang 12, sowie einen Anschlussstutzen 30, der ein Eingriffsende 31 mit Außenumfang 32 zur Zusammenarbeit mit dem Innenumfang 12 des Elastomereinsatzes 10 besitzt. Hierzu können bevorzugt der Innenumfang des Elastomereinsatzes und/oder der Außenumfang des Anschlussstutzens jeweils konisch ausgebildet sein. Ferner weist der Anschlussstutzen 30 ein Muffenende oder einen Hohlraum zur Zusammenarbeit mit einer aus Gründen der Übersichtlichkeit nicht dargestellten Nebenrohrleitung auf. Bei der dargestellten Ausführungsform ist beispielhaft ein Muffenende 33 zu sehen. Der Außenumfang 11 des Elastomereinsatzes 10 ist an die Öffnung 2 angepasst und insbesondere derart bemessen, dass der Elastomereinsatz auch ohne eingeführten Anschlussstutzen 30 bereits einen Gleit- oder Presssitz mit der Öffnung eingeht. Der Elastomereinsatz 10 besitzt darüber hinaus einen Anschlagsflansch 13, insbesondere einen umlaufenden Anschlagsflansch, und einen sich an diesen Anschlagsflanschbereich anschließenden Bereich, der sich als Kompressionsbereich 14 in die Öffnung 2 hinein erstreckt.

Wie zu sehen, ist ferner der Innenumfang 12 des Elastomereinsatzes 10 wenigstens teilweise, insbesondere im Kompressionsbereich, enger als der Außenumfang 32 des Eingriffsendes 31 des Anschlussstutzens 30. Der Anschlussstutzen ist in der Regel aus einem gegenüber dem Material des Elastomereinsatzes härteren Material, so dass folglich bei eingeführtem Anschlussstutzen 30 dieser den Elastomereinsatz 10 und insbesondere den Kompressionsbereich 14 gegen die Wandung 3, welche die Öffnung definiert, presst.

Gemäß Erfindung ist das Material des den Anschlagsflansch 13 ausbildenden Bereichs des Elastomereinsatzes 10 gegenüber dem Material des Kompressionsbereichs 14 des Elastomereinsatzes härter, welches in Folge einen verbesserten und insbesondere definierteren Sitz des Elatomereinsatzes 10 insgesamt in der Öffnung sicherstellt und also auch einem Verrutschen des Elastomereinsatzes 10 beim Einführen des Anschlussstutzens 30 effektiv entgegenwirkt. Es hat sich als zweckmäßig erwiesen, dass das Material, aus dem der Anschlagsflansch 13 gebildet ist, beispielsweise eine Härte von 60-80 Shore-A besitzt, wohingegen der des Kompressionsbereichs 14 eine Shore-A Härte von etwa 40-60 besitzt. In den Anschlagsflansch 13 kann gemäß bevorzugter Weiterbildung ferner eine Kerbe 15 eingebracht sein, so dass sich der Anschlagsflansch leichter an die Außenwand der Hauptrohrleitung, z.B. eines Betonrohres, des Schachtes oder dergleichen anlegt und sich der Außenwandkontur besser anpassen kann.

Auch der Anschlussstutzen 30 kann zweckmäßig einen, insbesondere umlaufenden Anschlagsflansch 34 besitzen, der bei einer vorbestimmten Einführtiefe auf dem Anschlagsflansch 13 des Elastomereinsatzes zum Liegen kommt, und folglich als eine Einschubbegrenzung am Anschlussstutzen dient. Ferner kann hierdurch zweckmäßig bereits eine frühe Kompressionsverstärkung des Elastomereinsatzes, insbesondere des Kompressionsbereiches, beim Einführen des Anschlussstutzens erwirkt werden, sobald der Anschlagsflansch 34 des Anschlussstutzens beim Einführen in Kontakt mit dem Anschlagsflansch 13 tritt, da hierdurch dann vorteilhaft wiederum frühzeitig Druck auf den Kompressionsbereich 14 ausgeübt wird. Vorzugsweise ist, wie in den Figuren dargestellt, der Anschlagsflansch 13 lediglich auf der, der Außenwand abgewandten Seite mit einer solchen umlaufenden Kerbe 15 ausgebildet.
Der Anschlagsflansch 34 des Anschlussstutzens ist dann ferner zweckmäßig derart gestaltet, dass dieser lediglich auf dem in Bezug zur Kerbe 15 radial innenliegenden Bereich des Anschlagsflansches 13 in Kontakt mit diesem tritt. Die Druckausübung auf den Kompressionsbereich 14 kann hierdurch wesentlich verstärkt werden, da im Wesentlichen nur auf den in Bezug zur Kerbe 15 radial innenliegenden Bereich des Anschlagsflansches 13 Druck ausgeübt wird und der in Bezug zur Kerbe 15 radial außenliegenden Bereich des Anschlagsflansches 13 nicht. Der Druck wird folglich gezielt in Richtung Kompressionsbereich 14 gelenkt.

Wie bei der Ausführungsform nach Fig. 1 ferner dargestellt, kann der Elastomereinsatz, zusätzlich zu den beiden Bereichen des Anschlagsflansches 13 und des Kompressionsbereichs 14 mit unterschiedlichen Shore-Härte-Materialien, mit einem sich an den Kompressionsbereich 14 anschließenden dritten Bereich 16 ausgebildet sein, dessen Material wiederum härter als das Material des Kompressionsbereichs ist und der z.B. eine Shore-A Härte von etwa 60-89 besitzt.
Dies bewirkt folglich eine nochmals in Bezug auf den Anpressdruck gesteigerte Wirkung in diesem Bereich, so dass somit der Elastomereinsatz 10 zweckmäßig auch zum weiter in die Öffnung 2 eingeführten Ende des Elastomereinsatzes hin mittels eines fester verpressten Bereichs den Kompressionsbereich 14 in einem definierten Sitz hält. Der aus einem demgegenüber weicherem Material gebildete Kompressionsbereich 14 kann sich hingegen besser an die Oberfläche der Wandung 3 zur Abdichtung der Öffnung gegenüber dieser Wandung 3 anschmiegen. Es sei darauf hingewiesen, dass sich das Material des den Anschlagflansch 13 bildenden Bereichs auch geringfügig in die Öffnung 2 erstrecken kann, so dass zwei an der Wandung 3 fest verpresste Bereiche des Elastomereinsatzes den Kompressionsbereich 14 von zwei Seiten in einem definierten Sitz halten.

Im Kompressionsbereich 14 oder im Falle eines sich daran schließenden dritten Materialbereichs 16 auch dort, wie bei Fig. 1 gezeigt, können ferner an dem, dem Anschlagsflansch entgegengesetzten Ende des Elastomereinsatzes 10, also an dem Ende, welches am weitesten in die Öffnung 2 eingeführt ist, zusätzlich am Innenumfang des Elastomereinsatzes ausgebildete und folglich nach innen in die Öffnung ragende Kompressionslippen 17 angeordnet sein, welche für eine nochmals gesteigerte Anpresswirkung und auch zusätzliche Abdichtung, insbesondere auch zwischen Elastomereinsatz 10 und Eingriffsende 31 des Anschlussstutzen, verhelfen.

Für das Zusammenarbeiten des Eingriffsendes 31 des Anschlussstutzens 30 mit dem Innenumfang des Elastomereinsatzes 10 ist gemäß einer, wie bei Fig. 1 skizzierten Ausführungsform eines Elastomereinsatzes 10, die Ausbildung jeweils gegenläufiger Zahn-förmiger Fortsätze 18, 38 am Innenumfang des Elastomereinsatzes bzw. am Außenumfang des Anschlussstutzens vorgesehen, sodass im Grundsatz Widerhaken geschaffen sind, die für eine Verzahnung der beiden zusammenarbeitenden Komponenten Sorge tragen und ein Wiederherausdrücken verhindern, wenn das Eingriffsende 31 des Anschlussstutzens in den hohlstopfenförmigen Elastomereinsatz eingeführt bzw. eingetrieben wird.

Um auch in einem solchen oder ähnlichen Verzahnungsbereich eine zusätzliche Abdichtung zwischen dem Innenumfang des Elastomereinsatzes und dem Außenumfang des Anschlussstutzens bereitzustellen, ist in bevorzugter Weiterbildung vorgesehen, die Zahn-förmigen Fortsätze 18 am Innenumfang des Elastomereinsatzes und die Zahn-förmigen Fortsätze 38 am Außenumfang des Anschlussstutzens zumindest teilweise in unterschiedlichen Längen und Überständen auszubilden. Hierdurch kann auf einfache Weise zweckmäßig erreicht werden, dass bestimmte Zahn-förmige Fortsätze 18 am Innenumfang des Elastomereinsatzes sich nicht mit Zahn-förmigen Fortsätzen 38 am Außenumfang des Anschlussstutzens verzahnen können, sondern sich gegenseitig aneinanderpressen und in Folge abdichtend verpressen. Für die Herstellung eines vorteilhaften Presssitzes des Anschlussstutzens in dem Elastomereinsatz hat es sich ferner als günstig erwiesen, die Lage der einzelnen Zahn-förmigen Fortsätze 18 und 38 konisch zur Öffnungsmitte zulaufen zu lassen, wie bei Fig. 1 angedeutet, z.B. in einem Winkel von 3-10°.

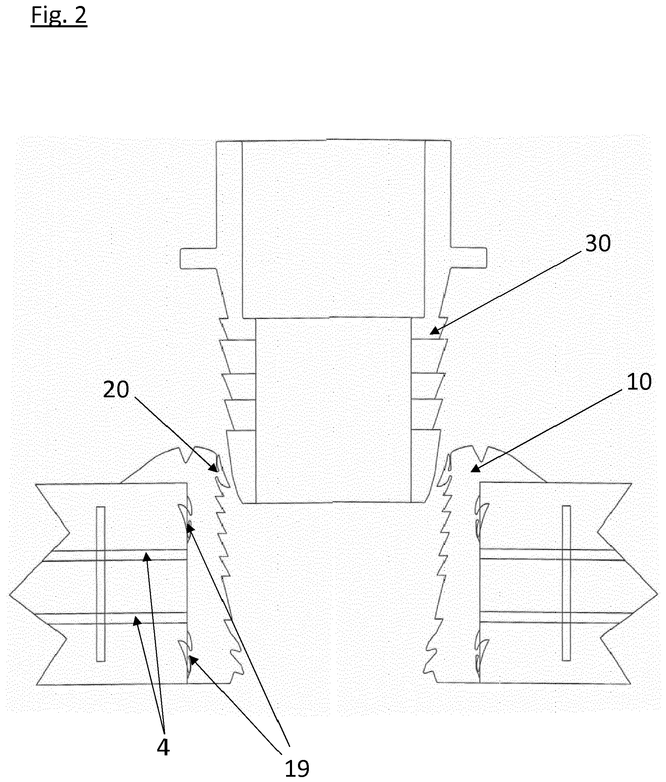

Bei Fig. 2 ist eine weitere, gegenüber der Ausführungsform nach Fig. 1 abgewandelte Ausführungsform einer Anschlussvorrichtung gemäß der Erfindung in Prinzipskizze dargestellt. Nachfolgend wird im Wesentlichen lediglich auf verschiedene, im Rahmen der Erfindung wesentliche Abwandlungen der der Ausführungsform nach Fig. 2 gegenüber der Ausführungsform nach Fig. 1 eingegangen. Zunächst ist in Bezug auf Fig. 2 jedoch festzuhalten, dass bei der dort gezeigten Ausführungsform der Anschlussstutzen 30 in Bezug auf den Elastomereinsatz 10 in noch nicht eingeführtem Zustand dargestellt ist.

Ferner sind bei der Ausführungsform nach Fig. 2 z.B. der erste, den Anschlagsflansch 13 bildende Bereich und der sich an den Anschlagsflansch anschließende Kompressionsbereich 14 aus einem einzigen Material, d.h. aus einem Material mit derselben Shore-A Härte aufgebaut.

Stattdessen sind am Außenumfang 11 des Elastomereinsatzes zwei, insbesondere genau zwei umlaufende Dichteinrichtungen 19 gesondert ausgebildet, die im Wesentlichen parallel zueinander verlaufen und dafür bemessen und bestimmt sind, durchschnittene Stahlarmierungen 4 bei der Rohrwand-Queröffnung einzukammern. So wird nämlich, wie bereits der EP 0 795 712 A1 zu entnehmen, in der Regel bei der Herstellung der Öffnung 2 eine als Längs- oder insbesondere auch eine Querbewehrung 4 in der Hauptrohrleitung, dem Schacht oder dergleichen integrierte Stahlarmierung 4 durchschnitten, worunter die Regelmäßigkeit der Herstellung der Queröffnung 2 leidet und auch Korrosionsschäden aufgrund von an die Schnittstellen gelangender Feuchtigkeit die Folge sein können. Die beiden gesondert am Außenumfang des Elastomereinsatzes 10 ausgebildeten, umlaufenden Dichteinrichtungen 19 werden bei Einführung des Eintrittsendes 31 des Anschlussstutzens 30 in den Elastomereinsatz 10 folglich durch die in Richtung Wandung 3 ausgeübte Druckwirkung gesondert verpresst und/oder gequetscht, wodurch an den umlaufenden, die abgeschnittenen Armierungen 4 einrahmenden Stellen der Dichteinrichtungen 19 eine feste Einspannung und in Folge sichere Abdichtung erfolgt. Derartige, gesondert ausgebildete Dichteinrichtungen können in zweckmäßigen Ausgestaltungen als umlaufende Dichtungen mit Kipplippen ausgebildet sein, insbesondere als umlaufende Lippendichtungen mit T-Profil, d.h. als umlaufende Lippendichtungen, bei denen sich von einem Dichtungssteg ausgehend und im Profil bzw. im Querschnitt betrachtet, zu zwei entgegen gesetzten Seiten hin jeweils eine Lippe erstreckt. Solche, wie z.B. bei Fig. 2 als Dichteinrichtungen 19 skizzierte umlaufende Dichtlippen mit T-Profil ermöglichen ein Verkippen oder Verschwenken der vom Dichtungssteg sich beidseitig wegerstreckenden Lippen und erlauben somit eine Veränderung des Dichtprofils in dessen Stellung, Position und/oder Neigung in Bezug auf den Außenumfang beim Einführen des Elastomereinsatzes 10 in die Öffnung 2, so dass sie sich dem Verlauf der Wandung 3 der Öffnung anpassen und sich in Folge an die Wandung abdichtend anlegen.

Ergänzend kann, z.B. gemäß Ausführungsform nach Fig. 2 eine solche umlaufende Dichtung 20 mit Kipplippen auch als Einführhilfe des Anschlussstutzens am Innenumfang 12 des Elastomereinsatzes ausgebildet sein. Um für den Anschlussstutzen 30 als Einführhilfe zu fungieren, eignet sich folglich insbesondere eine Stelle am Innenumfang 12, welche entweder noch im Bereich liegt, der den Anschlagsflansch ausbildet oder am Anfang des sich daran anschließenden Kompressionsbereichs, d.h. im Wesentlichen an der, in Bezug auf den Anschlussstutzen einführungsseitigen Seite des Innenumfangs des Elastomereinsatzes. Auch eine solche umlaufende Dichtung 20 mit Kipplippen am Innenumfang 12 des Elastomereinsatz passt sich beim Einführen des Anschlussstutzens folglich dem Verlauf des Außenumfangs 32 des Anschlussstutzens 30 an und kann sich in Folge an den Außenumfang abdichtend anlegen. Insbesondere, bei Anordnung einer solchen umlaufenden Dichtung 20 mit Kipplippen bereits im Kompressionsbereich 14 führt dies entsprechend zu einer nochmals gesteigerten Abdichtwirkung einschließlich der damit einhergehenden Sicherheit.

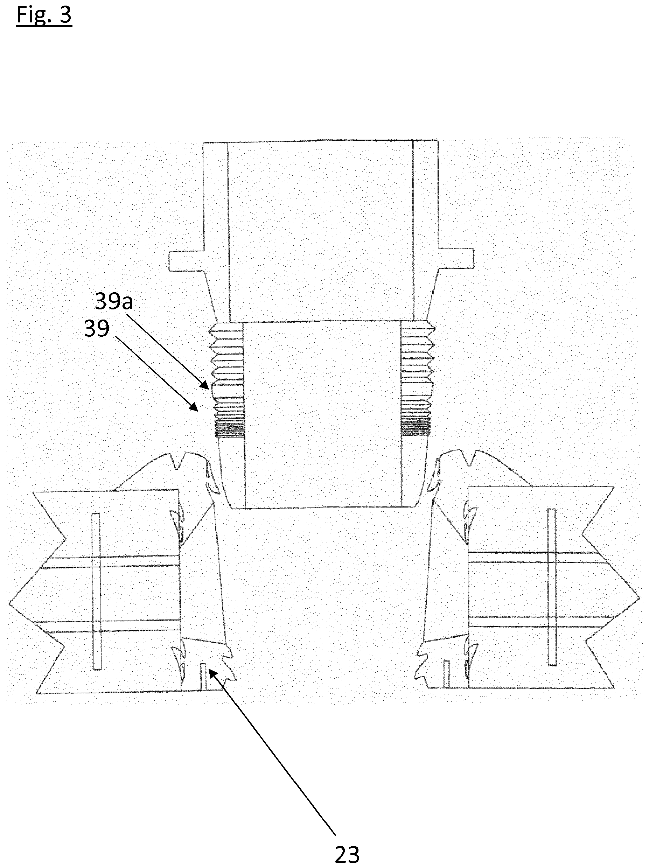

Die gemäß Fign. 3 bis 5 dargestellten, jeweils nochmals abgewandelten, weiteren Ausführungsformen einer Anschlussvorrichtung gemäß der Erfindung zeigen in Prinzipskizze zunächst jeweils eine Kombination der aus zwei Materialien unterschiedlicher Shore-A Härten ausgebildeten Bereiche eines Anschlagsflansches 13 und des Kompressionsbereichs 14. Ferner kann wiederum, ähnlich der Ausführungsform nach Fig. 1 sich noch ein weiterer dritter Bereich 16 an den Kompressionsbereich 14 anschließen, welcher aus einem gegenüber dem Material des Kompressionsbereichs härteren Elastomermaterial ist.

Ferner besitzen die Ausführungsformen nach Fign. 3 bis 5 ähnlich der Ausführungsform nach Fig. 2 zwei im Wesentlichen parallel zueinander verlaufende, am Außenumfang des Elastomereinsatzes 10 ausgebildete Dichteinrichtungen 19, die dafür bemessen und bestimmt sind, durchschnittene Stahlarmierungen 4 bei der Rohrwand-Queröffnung einzukammern. Beispielhaft ist ferner ergänzend eine umlaufende Dichtung 20 mit Kipplippen auch als Einführhilfe des Anschlussstutzens am Innenumfang 12 des Elastomereinsatz ausgebildet.

Darüber hinaus besitzen die Anschlussstutzen an deren Außenumfang jeweils ein Gewinde 39, welches bei den dort skizzierten Ausführungsformen ohne Gegengewinde auskommt und ferner insbesondere partiell unterbrochen 39a ist und/oder eine sich über einzelne Gewindegänge ändernde, insbesondere eine von Gewindegang zu Gewindegang zunehmende Steigung und/oder Zahnhöhe aufweist.

Aufgrund der partiellen Unterbrechung 39a des Gewindes, kann im Rahmen der Erfindung wieder eine partiell geschlossene Dichtebene am Außenumfang des Anschlussstutzens erwirkt werden und einer Umläufigkeit von Wasser über das Gewinde entgegengewirkt werden.

Eine Änderung der Steigung und/oder Zahnhöhe des Gewindes 39, insbesondere dergestalt, dass das Gewinde mit kleiner Steigung und Zahnhöhe beginnt und sich von Gewindegang zu Gewindegang in der Steigung und/oder Zahnhöhe ändert, ist für ein Verschrauben des Anschlussstutzens im Elastomereinsatz, insbesondere im Kompressionsbereich 14 ohne Gegengewinde zweckmäßig. Dadurch wird sichergestellt, dass das Gewinde 39 anfangs greift und beim weiteren Einschrauben durch die größer werdenden Zähne ausreichend verankert. Das Gewinde kann parallel zur Schnittfläche verlaufen oder konisch, z.B. in einem Winkel von -10° bis +10°, wobei die Winkel der Dichtung, d.h. im Wesentlichen des Kompressionsbereichs des Elastomereinsatzes, und der durch das Außengewinde definierten Schraubebene auch voneinander abweichen können, insbesondere, um beim Einschrauben eine kontinuierlich größere Verpressung zu erzielen.

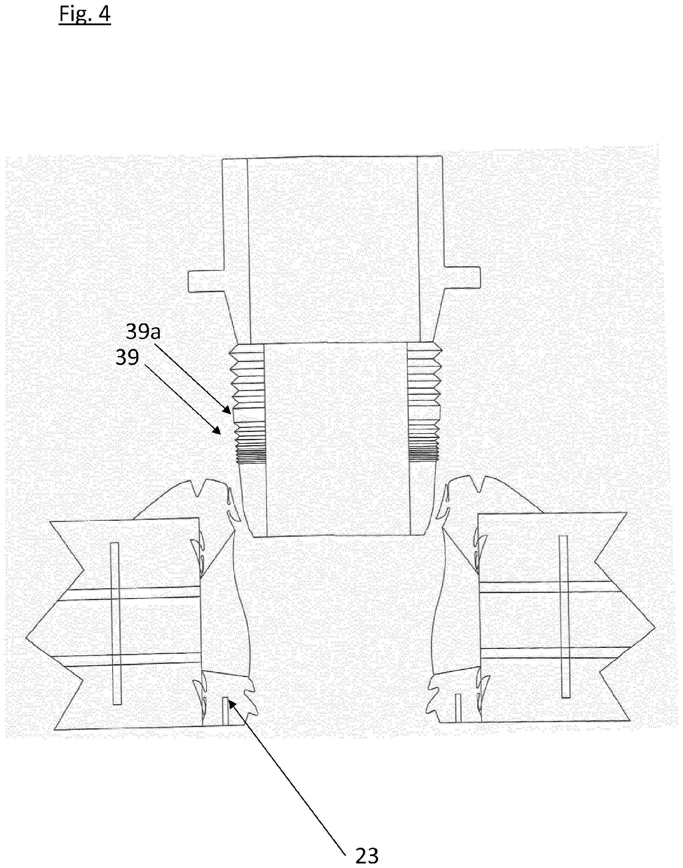

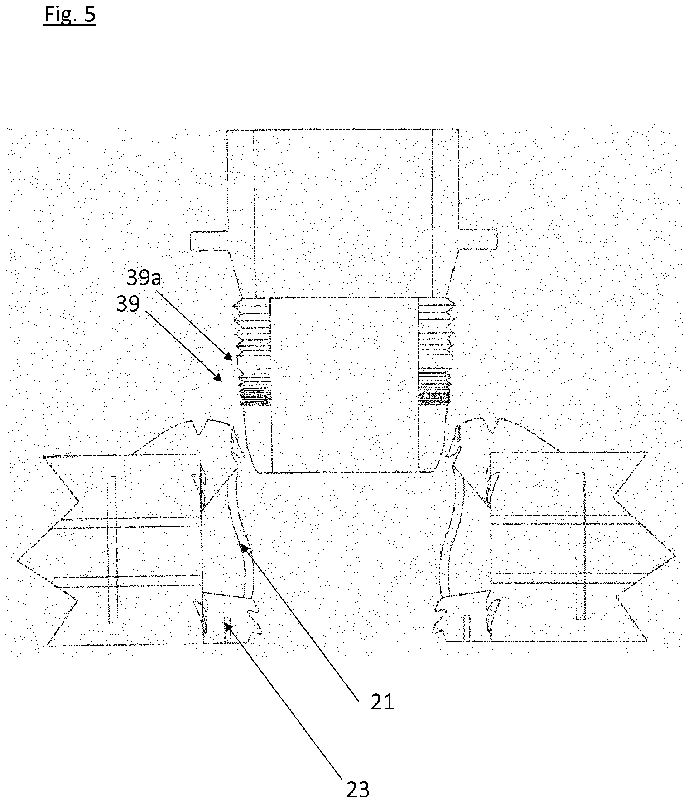

So kann beispielsweise die Kontaktfläche des Elastomereinsatzes, also insbesondere die am Innenumfang durch die Öffnung geführte Innenfläche im Kompressionsbereich, als Gegenfläche für das Außengewinde auch einer vorbestimmten Kontur folgen, d.h. einer Kurve bzw. einem Kurvenabschnitt folgen, wie dies z.B. den Fign. 4 und 5 im Gegensatz zur Fig. 3 zu entnehmen ist. Eine solche, kann zweckmäßig das Anschneiden der Dichtung erleichtern und partiell höhere Verpressungen und damit Dichtleistungen bewirken.

Ergänzend oder alternativ kann die Kontaktfläche des Elastomereinsatzes auch mit einer Gleitschicht überzogen sein oder aus einem gegenüber dem Kompressionsbereich anderen Material, insbesondere aus einem mit Gleiteigenschaften gebildet sein, wie dies z.B. in Fig. 5 mit der Bezugsziffer 21 angedeutet ist.

Des Weiteren ist bei den Ausführungsformen nach Fign. 3 bis 5 jeweils noch eine Tasche oder anderweitige Aussparung 23, insbesondere in Art eines Schlitzes, im Elastomereinsatz vorgesehen, zur Aufnahme eines Kennzeichnungssystems, z.B. eines Transponders, mit welchem spezifische Daten betreffend die Anschlussvorrichtung direkt am Ort hinterlegbar sowie ab- oder auslesbar sind.

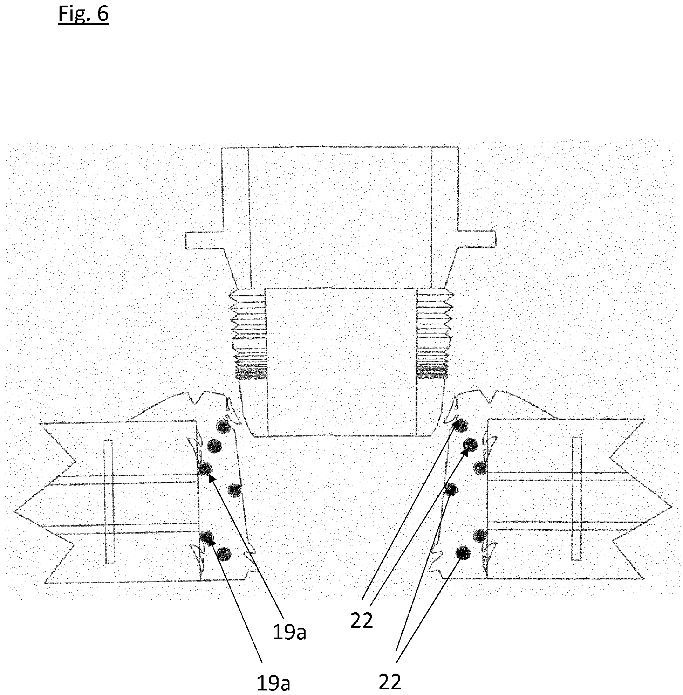

Bei einer weiteren Ausführungsform gemäß Fig. 6 ist ferner beispielsweise vorgesehen, insbesondere in Abwandlung zur Ausführungsform nach Fig. 2, zur Umsetzung von den beiden Dichteinrichtungen, welche zum Einkammern von abgeschnittenen Armierungen bestimmt sind, Quelldichtungen 19a einzusetzen. Hierzu kann z.B. in den Kompressionsbereich, angrenzend an den Außenumfang, zusätzliches Dichtmaterial integriert werden, welches beim Zutritt von Feuchtigkeit quillt und damit zu einer Erhöhung der Dichtwirkung führt. Es kann benachbart zu einer der beiden als umlaufende Dichtungen mit Kipplippen ausgebildeten Dichteinrichtungen zusätzlich eine Quelldichtung 19a angeordnet sein oder die beiden Dichteinrichtungen sind jeweils aus einer umlaufenden Dichtung mit Kipplippen und einer Quelldichtung aufgebaut, wie bei Fig. 6 zu sehen, so dass eine zusätzliche Anpressung der Lippe beim Zutritt von Feuchtigkeit bewirkt wird.

Ferner sind bei der Ausführungsform nach Fig. 6 in zweckmäßiger Weiterbildung noch in dem Elastomereinsatz eingebettete oder nachträglich eingebrachte Versteifungselemente 22 beherbergt. Ein solcher Elastomereinsatz weist folglich mittels der beherbergten Versteifungselemente 22, insbesondere im Kompressionsbereich, gezielt versteifende oder härtere Bereiche auf, die z.B. zur unterstützenden Beeinflussung eines nochmals verbesserten Sitzes des Elastomereinsatzes und/oder einer partiell gesteigerten Verpressung in geeigneter Form und geeignetem Material entsprechend gestaltet sind. Hierzu können insbesondere umläufige Einkerbungen im Elastomereinsatz, insbesondere im Kompressionsbereich, eingearbeitet sein, in welche ringförmig geschlossene Versteifungselemente nachträglich eingebracht werden können. Derartige Versteifungselemente können aus verschiedenen Materialen, wie Stahl, Kunststoff, Glasfaser, Gummi etc. sein. Auch können z.B. derartige Versteifungselemente aus einem gegenüber dem Kompressionsbereich härteren Elastomer sein und dann beispielsweise mittels eines Koextrusionsverfahrens zur Herstellung des Elastomereinsatzes direkt darin eingebettet worden sein.

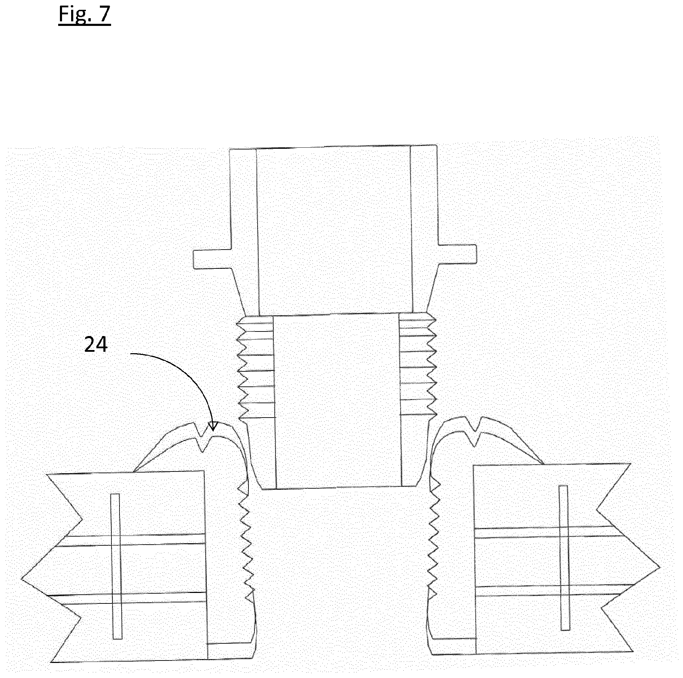

Bei der in Fig. 7 in Prinzipskizze gezeigten Ausführungsform sind sowohl am Innenumfang des Elastormereinsatzes und am Außenumfang des Anschlussstutzens jeweils ein korrespondierendes Gewinde ausgebildet.

Anhand vorstehender Beschreibung ist ersichtlich, dass insbesondere der Elastomereinsatz einer Anschlussvorrichtung im Rahmen der Erfindung als Exdrudat herstellbar ist, wobei sich bei Einsatz von Materialien unterschiedlicher Härten insbesondere die Anwendung eines Koextrusionsverfahrens als vorteilhaft gezeigt hat. Auch kann der Elasstomereinsatz zweckmäßig zunächst als Strang exdrudiert und anschließend mittels Vulkanisation zu der Hohlstopfenform verbunden sein. Weist der Elastomereinsatz zusätzlich ein Innengewinde auf, kann der Elastomereinsatz jeweils um eine Gewindestufe in der Höhe versetzt, wie bei Fig. 7 an der mit dem Bezugszeichen 24 versehenen Versatzstelle zu erkennen, zusammenvulkanisiert sein, sodass sich hiernach das fertiggestellte Gewinde bildet.

### Bezugszeichenliste

- 1: Hauptrohrleitung, Schacht oder dergleichen,
- 2: Öffnung bzw. Rohrwand-Queröffnung,
- 3: Wandung von Hauptrohrleitung, Schacht oder dergleichen
- 4: Stahlarmierung
- 10: hohlstopfenförmiger Elastomereinsatz,
- 11: Außenumfang des Elastomereinsatzes,
- 12: Innenumfang des Elastomereinsatzes,
- 13: Anschlagsflansch des Elastomereinsatzes,
- 14: Kompressionsbereich des Elastomereinsatzes,
- 15: Kerbe im Anschlagsflansch,
- 16: dritter Materialbereich des Elastomereinsatzes,
- 17: Kompressionslippen des Elastomereinsatzes,
- 18: Zahn-förmige Fortsätze am Elastomereinsatz,
- 19: Dichteinrichtung
- 19a: Quelldichtung
- 20: als Einführhilfe angeordnete, umlaufende Dichtung mit Kipplippen,
- 21: Gleitschicht oder Material mit Gleiteigenschaft,
- 22: Versteifungselemente,
- 23: Aussparung,
- 24: Versatzstelle,
- 30: Anschlussstutzen,
- 31: Eingriffsende des Anschlussstutzens,
- 32: Außenumfang des Anschlussstutzens,
- 33: Muffenende des Anschlussstutzens,
- 34: Anschlagsflansch des Anschlussstutzens,
- 38: Zahn-förmige Fortsätze am Anschlussstutzen,
- 39: Gewinde am Anschlussstutzen,
- 39a: Gewindeunterbrechung

## Patentansprüche

1. Anschlussvorrichtung für eine Nebenrohrleitung, die mit einer Öffnung in einer Hauptrohrleitung, eines Schachtes oder dergleichen zu verbinden ist,
mit
- einem hohlstopfenförmigen Elastomereinsatz (10), der einen an die Öffnung (2) angepassten Außenumfang (11), einen ersten, einen Anschlagsflansch (13) ausbildenden Bereich zur Anlage an der Außenwand der Hauptrohrleitung, des Schachtes oder dergleichen, einen Innenumfang (12) und einen sich an den Anschlagsflansch anschließenden Kompressionsbereich (14) besitzt, der sich in die Öffnung hinein erstreckt, und
- einem Anschlussstutzen (30), der ein Eingriffsende (31) mit Außenumfang (32) zur Zusammenarbeit mit dem Innenumfang des Elastomereinsatzes sowie ein Muffenende (33) oder einen Hohlraum zur Zusammenarbeit mit der Nebenrohrleitung besitzt, wobei der Innenumfang des Elastomereinsatzes wenigstens teilweise enger als der Außenumfang des Eingriffsendes des Anschlussstutzens ist,
**dadurch gekennzeichnet,**
- **dass** das Material des den Anschlagsflansch ausbildenden Bereichs des Elastomereinsatzes gegenüber dem Material des Kompressionsbereichs des Elastomereinsatzes härter ist
und/oder,
- **dass** am Außenumfang des Elastomereinsatzes zwei, insbesondere genau zwei umlaufende Dichteinrichtungen (19) gesondert ausgebildet sind, die im Wesentlichen parallel zueinander verlaufen und dafür bemessen und bestimmt sind, durchschnittene Armierungen (4) bei der Rohrwand-Queröffnung (2) einzukammern.

2. Anschlussvorrichtung nach Anspruch 1,
wobei der den Anschlagsflansch ausbildende Bereich des Elastomereinsatzes eine Kerbe (15) aufweist.

3. Anschlussvorrichtung nach Anspruch 1 oder 2,
wobei sich an den Kompressionsbereich des Elastomereinsatzes ein dritter Bereich (16) des Elastomereinsatzes anschließt, welcher ein gegenüber dem Elastomermaterial des Kompressionsbereichs härteres Elastomermaterial besitzt.

4. Anschlussvorrichtung nach einem der Ansprüche 1 bis 3, wobei der Anschlussstutzen einen Anschlagsflansch (34) besitzt, ausgebildet zum Anliegen an dem Anschlagsflansch (13) des Elastomereinsatzes.

5. Anschlussvorrichtung nach einem der Ansprüche 1 bis 4, wobei am Innenumfang des Elastomereinsatzes und am Außenumfang des Anschlussstutzens jeweils gegenläufig Zahn-förmige Fortsätze (18) ausgebildet sind, insbesondere Fortsätze am Anschlussstutzen und Elastomereinsatz, welche verschiedene Längen und Überstände aufweisen,
wobei insbesondere wenigstens ein Zahn-förmiger Fortsatz am Außenumfang und wenigstens ein Zahn-förmiger Fortsatz am Innenumfang ausgebildet sind zum gegenseitigen Verzahnen beim Zusammenwirken des Außenumfangs des Eingriffsendes mit dem Innenumfang des Elastomereinsatzes und wenigstens ein Zahn-förmiger Fortsatz am Außenumfang und wenigstens ein Zahn-förmiger Fortsatz Innenumfang ausgebildet sind zum gegenseitigen Komprimieren beim Zusammenwirken des Außenumfangs des Eingriffsendes mit dem Innenumfang des Elastomereinsatzes.

6. Anschlussvorrichtung nach einem der Ansprüche 1 bis 5, wobei der Innenumfang des Elastomereinsatzes und/oder der Außenumfang des Anschlussstutzens jeweils konisch ausgebildet sind.

7. Anschlussvorrichtung nach einem der Ansprüche 1 bis 6, wobei am Innenumfang des Elastomereinsatzes am dem, dem Anschlagsflansch entgegengesetzten Ende Kompressionslippen (17) ausgebildet sind.

8. Anschlussvorrichtung nach einem der Ansprüche 1 bis 7, wobei am Innenumfang des Elastomereinsatzes wenigstens eine umlaufende Dichtung mit Kipplippen als Einführhilfe (20) ausgebildet ist.

9. Anschlussvorrichtung nach einem der Ansprüche 1 bis 8, wobei die beiden am Außenumfang des Elastomereinsatzes ausgebildeten Dichteinrichtungen (19) zum Einkammern von Armierungen als umlaufende Dichtungen mit Kipplippen ausgebildet sind oder wobei benachbart zu einer der beiden als umlaufende Dichtungen mit Kipplippen ausgebildeten Dichteinrichtungen zusätzlich eine Quelldichtung angeordnet ist oder wobei die beiden Dichteinrichtungen jeweils aus einer umlaufenden Dichtung mit Kipplippen und einer Quelldichtung aufgebaut sind.

10. Anschlussvorrichtung nach einem der Ansprüche 1 bis 9, wobei am Innenumfang des Elastomereinsatzes und/oder am Außenumfang des Anschlussstutzen jeweils ein Gewinde ausgebildet ist.

11. Anschlussvorrichtung nach einem der Ansprüche 1 bis 10, wobei am Außenumfang des Anschlussstutzen ein Gewinde (39) ausgebildet ist, welches partiell unterbrochen (39a) ist und/oder eine sich über einzelne Gewindegänge ändernde Steigung und/oder Zahnhöhe aufweist.

12. Anschlussvorrichtung nach einem der Ansprüche 1 bis 11, wobei der Elastomereinsatz eine Tasche oder anderweitige Aussparung zur Aufnahme eines Kennzeichnungssystems beinhaltet.

13. Anschlussvorrichtung nach einem der Ansprüche 1 bis 12, wobei der Innenumfang des Elastomereinsatz mit einer Gleitschicht überzogen ist und/oder am Innenumfang des Kompressionsbereichs ein gegenüber dem übrigen Kompressionsbereich anderes Material umfasst ist.

14. Anschlussvorrichtung nach einem der Ansprüche 1 bis 12, wobei der Elastomereinsatz eingebettete oder nachträglich eingebrachte Versteifungselemente (22) beherbergt.

15. Anschlussvorrichtung nach einem der Ansprüche 1 bis 14, wobei der Elastomereinsatz als Extrudat herstellbar ist, insbesondere unter Anwendung eines Koextrusionsverfahrens, insbesondere als ein Extrudatstrang, der nachträglich mittels Vulkanisation zu der Hohlstopfenform verbunden ist.
